(19) Europäisches Patentamt
European Patent Office
Office européen des brevets

(11) **EP 3 122 855 B1**

(12) **EUROPEAN PATENT SPECIFICATION**

(45) Date of publication and mention
of the grant of the patent:
**08.05.2019 Bulletin 2019/19**

(51) Int Cl.:
***C11D 3/37*** *(2006.01)*    ***C11D 1/94*** *(2006.01)*
***C11D 3/08*** *(2006.01)*    ***C08F 220/56*** *(2006.01)*
***C11D 3/00*** *(2006.01)*

(21) Application number: **15767914.3**

(22) Date of filing: **13.03.2015**

(86) International application number:
**PCT/CN2015/074143**

(87) International publication number:
**WO 2015/143995 (01.10.2015 Gazette 2015/39)**

(54) **CLEANING COMPOSITIONS CONTAINING CATIONIC POLYMERS, AND METHODS OF MAKING AND USING SAME**

REINIGUNGSZUSAMMENSETZUNGEN MIT KATIONISCHEN POLYMEREN UND VERFAHREN ZUR HERSTELLUNG UND VERWENDUNG DAVON

COMPOSITIONS DE NETTOYAGE CONTENANT DES POLYMÈRES CATIONIQUES, ET LEURS PROCÉDÉS DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2014 PCT/CN2014/074122**

(43) Date of publication of application:
**01.02.2017 Bulletin 2017/05**

(73) Proprietor: **The Procter & Gamble Company**
**Cincinnati, OH 45202 (US)**

(72) Inventors:
• **SI, Gang**
**Beijing 101312 (CN)**
• **MUKHERJEE, Koushik**
**Beijing 101312 (CN)**
• **ZHANG, Qi**
**Beijing 101312 (CN)**
• **QIN, Peng**
**Beijing 101312 (CN)**
• **SIVIK, Mark Robert**
**Cincinnati, OH Ohio 45202 (US)**
• **FLORES-FIGUEROA, Aaron**
**Ludwigshafen 67056 (DE)**
• **BIRKEL, Susanne**
**Schwalbach am Taunus 65824 (DE)**

(74) Representative: **Siddiquee, Sanaul Kabir et al**
**N.V. Procter & Gamble**
**Services Company S.A.**
**Temselaan 100**
**1853 Strombeek-Bever (BE)**

(56) References cited:
EP-A1- 2 039 338          EP-A1- 2 039 338
WO-A1-2005/087907    WO-A1-2005/087907
WO-A1-2008/110590    WO-A1-2010/025116
WO-A1-2014/012375    WO-A2-2008/000766
WO-A2-2008/000766    US-A1- 2010 273 697
US-A1- 2011 195 889    US-A1- 2014 023 609
US-A1- 2014 023 609

**Description**

FIELD OF THE INVENTION

The present invention relates to cleaning compositions, and in particular it relates to a laundry detergent composition, preferably a liquid laundry detergent composition, that comprising a cationic polymer in an effective amount for optimizing sudsing profile and preferably also minimizing fabric whiteness loss after repeated wash cycles. The present invention also relates to methods of making and using such cleaning compositions.

BACKGROUND OF THE INVENTION

Sudsing profile is important for a cleaning composition, particularly laundry detergent, where the appropriate volume and speed of suds formation, retention and dissolution in the wash and rinse cycles are considered key benchmarks of performance by the consumers. For laundry detergents, while a sudsing profile is important for machine washing process, it is even more important in a typical hand-washing process as the consumer would see changes in the suds level in the wash and rinse cycles. Typically, consumers, particularly hand-washing consumers, desire laundry detergent that dissolves in the wash liquor to give voluminous suds during the wash cycle to signify sufficient performance. The suds are then carried over to the rinse solution and require additional time, water and labor to thoroughly rinse from the laundered fabric.

However, reducing the suds level overall is not a viable option because when the consumer sees little or no suds during the washing cycle, it causes the consumer to believe that the laundry detergent is not as active. In addition, the current market demands are for laundry detergents with improved environmental sustainability (e.g., less water consumption) without negatively impacting cleaning performance or the perception of cleaning performance (*i.e.*, appearance of suds on fabric or in the rinse solution). This, of course, reinforces the preference for laundry detergents having improved foam control composition for faster suds dissolution during the rinse cycle so as to reduce extra rinse cycles needed to remove the suds from the cleaned fabrics/rinse solution. Thus, there is a need for a cleaning composition having a sudsing profile where there is strong level of suds volume during the washing cycle, and yet quickly collapses in the rinsing solution for substantially reduced or zero suds for cost savings and environmental conservation purposes. This is known as the "single rinse" concept.

One solution has been to add a de-foaming agent during the rinse cycles, but this option is cost prohibitive for most hand-washing consumers. Additionally, the prior art discloses laundry detergent compositions with various foam-control or anti-foaming agents in an attempt to address this problem. For example, PCT Publication No. WO2011/107397 (Unilever) discloses a laundry detergent composition comprising a delayed-release amino-silicone based anti-foaming agent that is absorbed onto a carrier or filler to act in the rinsing cycle to reduce or eliminate suds, preferably after two rinse cycles. However, the suds control benefit imparted by such amino-silicone based anti-foaming agent may still come at the expense of wash suds, i.e., the wash suds volume can be significantly reduced since the silicone release timing is difficult to control. Inopportune release of the silicone anti-foam may lead to significant reduction of wash suds volume, which will give consumer the impression that the detergent composition contains lower surfactant level and is therefore of lower quality/value. EP Publication No. EP0685250A1 (Dow Corning) discloses a foam control composition for use in laundry detergents that inhibits the formation of new suds during the post-wash rinsing cycles, but which does not appear to quicken the elimination of already existing suds carried over from the wash cycle.

Accordingly, there is a need for a cleaning composition, preferably a laundry detergent composition, which enables strong suds formation (both fast generation of large volume of suds as well as stability or sustainability of the suds already generated over time) during the wash cycle while reducing and eliminating the suds quickly during the rinse cycle(s), preferably across a range of consumer wash habits and fabric/material surfaces being washed, so that a single rinse cycle might be sufficient to remove the suds, thereby enabling the "single rinse" concept.

Further, conventional de-foaming or anti-foaming agents, especially the polymeric de-foaming or anti-foaming agents, are known to cause significant whiteness loss in fabrics after repeated wash cycles, i.e., the grey or dull color in fabrics that have been exposed to many wash cycles. Therefore, the usage of such polymeric de-foaming or anti-foaming agents has been limited in laundry detergent compositions.

Correspondingly, it would be an advantage for laundry detergent compositions to also have reduced whiteness loss in fabrics after repeated wash.

US 2014/023609 A1 relates to cleaning composition, preferably a laundry detergent composition, comprising a foam control composition comprising a hydrophobically modified cationic polymer, as well as processes for making and method of using such compositions. The composition provides for enhanced suds removal during the rinse cycle with minimal or nil impact on suds volume during the wash cycle.

SUMMARY OF THE INVENTION

The present invention relates to a laundry detergent composition according to claim 1, which exhibits significant suds reduction during the rinse cycle while minimizing reduction of suds volume during the wash cycle, and at the same time leading to less fabric whiteness loss after repeated washing. It has now been discovered that the challenges presented hereinabove for conventional laundry detergents can be met by using cationic polymers containing (meth)acrylamide (AAm) and diallyl dimethyl ammonium chloride (DADMAC) monomers at a specific monomeric ratio and having a molecular weight within a specific range. The cationic polymers of use in the present invention have shown outstanding sudsing profile with no or little fabric whiteness loss.

In another aspect, the present invention relates to the use of a laundry detergent composition as described in claim 1 for hand-washing fabrics to achieve optimized sudsing profile as well as minimal whiteness loss.

These and other features of the present invention will become apparent to one skilled in the art upon review of the following detailed description when taken in conjunction with the appended claims.

DETAILED DESCRIPTION OF THE INVENTION

Definitions

As used herein, "suds" indicates a non-equilibrium dispersion of gas bubbles in a relatively smaller volume of a liquid. The terms like "suds", "foam" and "lather" can be used interchangeably within the meaning of the present invention.

As used herein, "sudsing profile" refers to the properties of a detergent composition relating to suds character during the wash and rinse cycles. The sudsing profile of a detergent composition includes, but is not limited to, the speed of suds generation upon dissolution in the laundering liquor, the volume and retention of suds in the wash cycle, and the volume and disappearance of suds in the rinse cycle. Preferably, the sudsing profile includes the Wash Suds Index and Rinse Suds Index, as specifically defined by the testing methods disclosed hereinafter in the examples. It may further include additional suds-related parameters, such as suds stability measured during the washing cycle and the like.

As used herein, the term "cleaning composition" means a liquid or solid composition for treating fabrics, hard surfaces and any other surfaces in the area of fabric and home care, and includes hard surface cleaning and/or treatment including floor and bathroom cleaners (*e.g.*, toilet bowl cleaners); hand dishwashing agents or light duty dishwashing agents, especially those of the high-foaming type; machine dishwashing agents; personal care compositions; pet care compositions; automotive care compositions; and household care compositions. In one embodiment, the cleaning composition of the present invention is a hard surface cleaning composition, preferably wherein the hard surface cleaning composition impregnates a nonwoven substrate.

As used herein, the term "laundry detergent composition" is a subset of "cleaning composition", and includes a liquid or solid composition, and includes, unless otherwise indicated, granular or powder-form all-purpose or "heavy-duty" washing agents for fabric, especially cleaning detergents as well as cleaning auxiliaries such as bleach, rinse aids, additives or pre-treat types. In one embodiment, the laundry detergent composition is a solid laundry detergent composition, and preferably a free-flowing particulate laundry detergent composition (*i.e.,* a granular detergent product).

As used herein, "charge density" refers to the net charge density of the polymer itself and may be different from the monomer feedstock. Charge density for a homopolymer may be calculated by dividing the number of net charges per repeating (structural) unit by the molecular weight of the repeating unit. The positive charges may be located on the backbone of the polymers and/or the side chains of polymers. For some polymers, such as those with amine structural units, the charge density depends on the pH of the carrier. For these polymers, charge density is calculated based on the charge of the monomer at pH of 7. Typically, the charge is determined with respect to the polymerized structural unit, not necessarily the parent monomer.

As used herein, the term "Cationic Charge Density" (CCD) means the amount of net positive charge present per gram of the polymer. Cationic charge density (in units of milliequivalents of charge per gram of polymer) may be calculated according to the following equation:

$$CCD = \frac{1000 \times E2 \times C2}{C1 \times W1 + C2 \times W2 + C3 \times W3}$$

where: E2 is the molar equivalents of charge of the cationic structural unit; C2 is the molar percentage of the cationic structural unit; C1 and C3 are the molar percentages of the first and second (if any) nonionic structural units; W1, W2 and W3 are the molecular weights of the first nonionic structural unit, the cationic structural unit, and the second nonionic structural unit (if any), respectively. For example, for an AAm/QVi/VP copolymer containing 80 mol% of AAm, 5 mol% of QVi, and 15 mol% of VP respectively, its cationic charge density (meq/g) is calculated as: $CCD = 1000 \times E_2 \times C_2/$

(C1 W1 + $C_2 W_2 + C_3 W_3$), wherein $E_2 = 1$, $C_1=80$, $C_2=5$, $C_3=15$, $W_1=71.08$, $W_2=220.25$ and $W_3=1$ 11.14. Therefore, the cationic charge density of this copolymer is: $CCD = 1000 \times 1 \times 5/(80 \times 71.08 + 5 \times 220.25 + 15 \times 111.14) = 0.59$.

As used herein, the term "molecular weight" refers to the weight average molecular weight of the polymer chains in a polymer composition. Further, the "weight average molecular weight" ("Mw") may be calculated using the equation:

$$Mw = (\Sigma i \, Ni \, Mi^2) / (\Sigma i \, Ni \, Mi)$$

Where Ni is the number of molecules having a molecular weight Mi. The weight average molecular weight must be measured by the method described in the Test Methods section.

As used herein "mol%" refers to the relative molar percentage of a particular monomeric structural unit in a polymer. It is understood that within the meaning of the present invention, the relative molar percentages of all monomeric structural units that are present in the cationic polymer shall add up to 100 mol%.

As used herein, the term "derived from" refers to monomeric structural unit in a polymer that can be made from a compound or any derivative of such compound, i.e., with one or more substituents. Preferably, such structural unit is made directly from the compound in issue. For example, the term "structural unit derived from (meth)acrylamide" refers to monomeric structural unit in a polymer that can be made from (meth)acrylamide, or any derivative thereof with one or more substituents. Preferably, such structural unit is made directly from (meth)acrylamide. The term "(meth)acrylamide" refers to either methacrylamide or acrylamide, and it is abbreviated herein as "AAm." For another example, the term "structural unit derived from a diallyl dimethyl ammonium salt" refers to monomeric structural unit in a polymer that can be made directly from a diallyl dimethyl ammonium salt, or any derivative thereof with one or more substituents. Preferably, such structural unit is made directly from such diallyl dimethyl ammonium salt. For yet another example, the term "structural unit derived from vinylpyrrolidone" refers to monomeric structural unit in a polymer that can be made from vinylpyrrolidone (VP), or any derivative thereof with one or more substituents. Preferably, such structural unit is made directly from VP.

The term "ammonium salt" or "ammonium salts" as used herein refers to various compounds selected from the group consisting of ammonium chloride, ammonium fluoride, ammonium bromide, ammonium iodine, ammonium bisulfate, ammonium alkyl sulfate, ammonium dihydrogen phosphate, ammonium hydrogen alkyl phosphate, ammonium dialkyl phosphate, and the like. For example, the diallyl dimethyl ammonium salts as described herein include, but are not limited to: diallyl dimethyl ammonium chloride (DADMAC), diallyl dimethyl ammonium fluoride, diallyl dimethyl ammonium bromide, diallyl dimethyl ammonium iodine, diallyl dimethyl ammonium bisulfate, diallyl dimethyl ammonium alkyl sulfate, diallyl dimethyl ammonium dihydrogen phosphate, diallyl dimethyl ammonium hydrogen alkyl phosphate, diallyl dimethyl ammonium dialkyl phosphate, and combinations thereof. Preferably but not necessarily, the ammonium salt is ammonium chloride.

As used herein, articles such as "a" and "an" when used in a claim, are understood to mean one or more of what is claimed or described.

As used herein, the terms "comprising," "comprises," "include", "includes" and "including" are meant to be non-limiting. The term "consisting of' or "consisting essentially of' are meant to be limiting, i.e., excluding any components or ingredients that are not specifically listed except when they are present as impurities. The term "substantially free of' as used herein refers to either the complete absence of an ingredient or a minimal amount thereof merely as impurity or unintended byproduct of another ingredient.

As used herein, the term "solid" includes granular, powder, bar and tablet product forms.

As used herein, the term "fluid" includes liquid, gel, paste and gas product forms.

As used herein, the term "liquid" refers to a fluid having a liquid having a viscosity of from about 1 to about 2000 mPa∗s at 25°C and a shear rate of 20 sec-1. In some embodiments, the viscosity of the liquid may be in the range of from about 200 to about 1000 mPa∗s at 25°C at a shear rate of 20 sec-1. In some embodiments, the viscosity of the liquid may be in the range of from about 200 to about 500 mPa∗s at 25°C at a shear rate of 20 sec-1.

All temperatures herein are in degrees Celsius (°C) unless otherwise indicated. Unless otherwise specified, all measurements herein are conducted at 20°C and under the atmospheric pressure.

In all embodiments of the present invention, all percentages are by weight of the total composition, unless specifically stated otherwise. All ratios are weight ratios, unless specifically stated otherwise. The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

It is understood that the test methods that are disclosed in the Test Methods Section of the present application must be used to determine the respective values of the parameters of Applicants' inventions are described and claimed herein.

Cationic Polymer

The cationic polymer used in the present invention is a copolymer that consists of at least two types of structural units. The structural units, or monomers, can be incorporated in the cationic polymer in a random format or can be in a blocky format.

In a particularly preferred embodiment of the present invention, such cationic polymer is a copolymer that contains only the first and second structural units as described hereinabove, i.e., it is substantially free of any other structural components, either in the polymeric backbone or in the side chains. In another preferred embodiment of the present invention, such cationic polymer is a terpolymer that contains only the first, second and third structural units as described hereinabove, free of any other structural components.

The first structural unit in the cationic polymer of the present invention is derived from (meth)acrylamide (AAm).

The second structural unit in the cationic polymer is derived from a diallyl dimethyl ammonium salt as described hereinabove.

The third structural unit, which is optional for the cationic polymer of the present invention, is derived from vinylpyrrolidone (VP).

In a particularly preferred embodiment of the present invention, the cationic polymer is a copolymer that does not contain any of the third structural unit (i.e., the third structural unit is present at 0 mol%) and consists essentially of only the first and second structural units as described hereinabove. Such cationic polymer is an AAm/DADMAC copolymer consisting of (i.e., the polymer is free of other structural units): (i) from 70 mol% to 90 mol%, of the AAm-derived first structural unit; (ii) from 10 mol% to 30 mol%, of the DADMAC-derived second structural unit; and (iii) 0 mol% of the VP-derived structural unit, i.e., free of such VP-derived third structural unit.

In another specific embodiment of the present invention, the cationic polymer contains the first, second and third structural units as described hereinabove, and is free of any other structural unit. Such cationic polymer is an AAm/DADMAC/VP terpolymer consisting of: (i) from 65 mol% to 90 mol% of the AAm-derived structural unit; (ii) from 10 mol% to 20 mol%, of the second cationic structural unit as described hereinabove for the copolymer; and (iii) from about 1 mol% to about 20 mol%, of the VP-derived structural unit.

The specific molar percentage ranges of the first, second, and optionally third structural units of the cationic polymer as specified hereinabove is critical for optimizing the sudsing profile generated by the laundry detergent compositions containing such cationic polymer during the wash and rinse cycles.

Laundry detergent compositions containing such cationic polymer of the present invention are characterized by a sudsing profile defined by: (1) a Wash Suds Index (WSI) of more than about 70%, preferably more than about 80%, and more preferably more than about 100%; and (2) a Rinse Suds Index (RSI) of less than about 40%, preferably less than about 30%, and more preferably less than about 20%, as determined by the Sudsing Profile Test described hereinafter. Specifically, the laundry detergent composition of the present invention has an optimal sudsing profile that is defined by a WSI of more than about 70% and a RSI of less than about 40%, preferably a WSI of more than about 80% and RSI of less than about 30%, and more preferably a WSI of more than about 100% and a RSI of less than about 20%.

The specific molecular weight range for the cationic polymer as specified hereinabove also provides improved sudsing profile. More importantly, such molecular weight range is particularly effective in reducing the whiteness loss that is commonly seen in fabrics after they have been exposed to multiple washes. Cationic polymers have been known to contribute to fabric whiteness loss, which is a limiting factor for wider usage of such polymers. However, inventors of the present invention have discovered that by controlling the molecular weight of the cationic polymer within a specific range, i.e., from 20,000 to 350,000 Daltons, the fabric whiteness loss can be effectively reduced in comparison with conventional cationic polymers.

Preferably, laundry detergent compositions containing the cationic polymer of the present invention are characterized by a Relative Whiteness Loss Percentage (WLP) of not more than about 100%, preferably not more than about 50%, and more preferably not more than about 10%, as determined by the Whiteness Loss Test described hereinafter.

It is noted that cationic polymers containing AAm- and DADMAC-derived structural units in various combinations have been previously used in laundry detergent compositions, typically as deposition aid polymers. However, such conventional cationic polymers used as deposition aids in laundry detergents have different monomeric ratios and/or significantly higher molecular weights from the cationic polymers of this invention. The inventors of the present invention have discovered, surprisingly and unexpectedly, that cationic polymers with the specific monomeric make-up and the specific molecular weight as defined hereinabove can provide superior sudsing profile and reduced fabric whiteness loss, in comparison with the conventional cationic polymers. Further, there seem to be absent of any terpolymer containing or consisting of all three structural units.

Further, product viscosity can be impacted by molecular weight and cationic content of the cationic polymer. Molecular weights of polymers of the present invention are also selected to minimize impact on product viscosity to avoid product instability and stringiness associated with high molecular weight and/or broad molecular weight distribution.

Cleaning Compositions

The present invention provides a cleaning composition comprising the cationic polymer as mentioned hereinabove. In one aspect, the cleaning composition can be hard surface cleaners, such as for example, dish washing detergents, and those used in the health and beauty areas, including shampoos and soaps, which may benefit from products having improved sudsing profiles. In another aspect, the cleaning composition is suitable for laundry detergent application, for example: laundry, including automatic washing machine laundering or hand-washing, or cleaning auxiliaries, such as for example, bleach, rinse aids, additives or pre-treat types.

The cleaning or laundry detergent compositions can be in any form, namely, in the form of a liquid; a solid such as a powder, granules, agglomerate, paste, tablet, pouches, bar, gel; an emulsion; types delivered in dual- or multi-compartment containers or pouches; a spray or foam detergent; premoistened wipes (*i.e.,* the cleaning composition in combination with a nonwoven material); dry wipes (*i.e.,* the cleaning composition in combination with a nonwoven materials) activated with water by a consumer; and other homogeneous or multiphase consumer cleaning product forms.

The laundry detergent composition is preferably a liquid laundry detergent and can be a fully formulated laundry detergent product. Liquid compositions contained in encapsulated and/or unitized dose products are included, as are compositions which comprise two or more separate but jointly dispensable portions. More preferably, the laundry detergent composition is a liquid laundry detergent composition designed for hand-washing, where the improved suds benefit or superior sudsing profile is most evident to the consumer. The liquid laundry detergent composition preferably contains water as an aqueous carrier, and it can contain either water alone or mixtures of organic solvent(s) with water as carrier(s). Suitable organic solvents are linear or branched lower $C_1$-$C_8$ alcohols, diols, glycerols or glycols; lower amine solvents such as $C_1$-$C_4$ alkanolamines, and mixtures thereof. Exemplary organic solvents include 1,2-propanediol, ethanol, glycerol, monoethanolamine and triethanolamine. The carriers are typically present in a liquid composition at levels in the range of from about 0.1% to about 98%, preferably from about 10% to about 95%, more preferably from about 25% to about 75% by total weight of the liquid composition. In some embodiments, water is from about 85 to about 100 wt% of the carrier. In other embodiments, water is absent and the composition is anhydrous. Highly preferred compositions afforded by the present invention are clear, isotropic liquids.

The liquid laundry detergent composition of the present invention preferably has a viscosity from about 1 to about 2000 centipoise (1-2000 mPa·s), or from about 200 to about 800 centipoises (200-800 mPa·s). The viscosity can be determined using a Brookfield viscometer, No. 2 spindle, at 60 RPM/s, measured at 25°C.

The amount of the cationic polymer of the present invention in the laundry detergent or cleaning composition is not particularly limited, as long as it is effective for providing an optimal sudsing profile with significant suds volume reduction during the rinse cycle and insignificant suds volume reduction during the wash cycle, which is particularly quantified by a Wash Suds Index (WSI) of more than about 70%, preferably more than about 80%, and more preferably more than about 100%, and a Rinse Suds Index (RSI) of less than about 40%, preferably less than about 30%, and more preferably less than about 20%, as defined by the Sudsing Profile Test described herein.

Preferably but not necessarily, the cationic polymer is provided in the cleaning or laundry detergent composition at an amount ranging from 0.2 wt% to 1wt%. Further, it is preferred, although not necessary, that the cationic polymer is substantially free of carrier particles or coating. This is advantageous as it avoids an extra step and cost associated with the incorporation of these materials.

In a specific embodiment of the present invention, a silicone-derived anti-foaming agent is used in combination with the cationic polymer in a cleaning composition, or preferably a laundry detergent composition. Although not necessary for carrying out the present invention, such silicone-derived anti-foaming agent may further improve the sudsing profile of the cleaning composition.

The silicone-derived anti-foaming agent can be any suitable organosilicones, including, but not limited to: (a) non-functionalized silicones such as polydimethylsiloxane (PDMS); and (b) functionalized silicones such as silicones with one or more functional groups selected from the group consisting of amino, amido, alkoxy, alkyl, phenyl, polyether, acrylate, siliconehydride, mercaptoproyl, carboxylate, sulfate phosphate, quaternized nitrogen, and combinations thereof. In typical embodiments, the organosilicones suitable for use herein have a viscosity ranging from about 10 to about 700,000 CSt (centistokes) at 20°C. In other embodiments, the suitable organosilicones have a viscosity from about 10 to about 100,000 CSt.

Polydimethylsiloxanes (PDMS) can be linear, branched, cyclic, grafted or cross-linked or cyclic structures. In some embodiments, the detergent compositions comprise PDMS having a viscosity of from about 100 to about 700,000 CSt at 20°C. Exemplary functionalized silicones include but are not limited to aminosilicones, amidosilicones, silicone polyethers, alkylsilicones, phenyl silicones and quaternary silicones. A preferred class of functionalized silicones comprises cationic silicones produced by reacting a diamine with an epoxide. One embodiment of the composition of the present invention contains organosilicone emulsions, which comprise organosilicones dispersed in a suitable carrier (typically water) in the presence of an emulsifier (typically an anionic surfactant). In another embodiment, the organosilicones are in the form of microemulsions having an average particle size in the range from about 1 nm to about 150 nm, or from about 10 nm to about 100 nm, or from about 20 nm to about 50 nm.

The silicone-derived anti-foaming agent as mentioned hereinabove can be present in the cleaning composition in an amount ranging from 0.2% to 1%, by total weight of the composition.

Cleaning compositions or laundry detergent compositions of the present invention may comprise one or more surfactants at amounts ranging from about 1% to about 80%, more preferably from about 1% to about 50%, and more preferably from about 5% to about 30% by total weight of the compositions. Detersive surfactants utilized can be of the anionic, nonionic, zwitterionic, amphoteric or cationic type or can comprise compatible mixtures of these types.

Anionic and nonionic surfactants are preferred. Useful anionic surfactants can themselves be of several different types. For example, water-soluble salts of the higher fatty acids, i.e., "soaps", are useful anionic surfactants in the compositions herein. This includes alkali metal soaps such as the sodium, potassium, ammonium, and alkyl ammonium salts of higher fatty acids containing from about 8 to about 24 carbon atoms, and preferably from about 12 to about 18 carbon atoms. Soaps can be made by direct saponification of fats and oils or by the neutralization of free fatty acids. Particularly useful are the sodium and potassium salts of the mixtures of fatty acids derived from coconut oil and tallow, i.e., sodium or potassium tallow and coconut soap. Additional non-soap anionic surfactants which are suitable for use herein include the water-soluble salts, preferably the alkali metal, and ammonium salts, of organic sulfuric reaction products having in their molecular structure an alkyl group (included in the term "alkyl" is the alkyl portion of acyl groups) containing from about 10 to about 20 carbon atoms and a sulfonic acid or sulfuric acid ester group. Examples of this group of synthetic anionic surfactants include, but are not limited to: a) the sodium, potassium and ammonium alkyl sulfates with either linear or branched carbon chains, especially those obtained by sulfating the higher alcohols ($C_{10}$-$C_{20}$ carbon atoms), such as those produced by reducing the glycerides of tallow or coconut oil; b) the sodium, potassium and ammonium alkylethoxy sulfates with either linear or branched carbon chains, particularly those in which the alkyl group contains from about 10 to about 20, preferably from about 12 to about 18 carbon atoms, and wherein the ethoxylated chain has, in average, a degree of ethoxylation ranging from about 0.1 to about 5, preferably from about 0.3 to about 4, and more preferably from about 0.5 to about 3; c) the sodium and potassium alkyl benzene sulfonates in which the alkyl group contains from about 10 to about 20 carbon atoms in either a linear or a branched carbon chain configuration, preferably a linear carbon chain configuration; d) the sodium, potassium and ammonium alkyl sulphonates in which the alkyl group contains from about 10 to about 20 carbon atoms in either a linear or a branched configuration; e) the sodium, potassium and ammonium alkyl phosphates or phosphonates in which the alkyl group contains from about 10 to about 20 carbon atoms in either a linear or a branched configuration, f) the sodium, potassium and ammonium alkyl carboxylates in which the alkyl group contains from about 10 to about 20 carbon atoms in either a linear or a branched configuration, and combinations thereof. Especially preferred for the practice of the present invention are surfactant systems containing $C_{10}$-$C_{20}$ linear alkyl benzene sulphonates (LAS), $C_{10}$-$C_{20}$ linear or branched alkylethoxy sulfates (AES) having an average degree of ethoxylation ranging from about 0.1 to about 5 (preferably from about 0.3 to about 4 and more preferably from about 0.5 to about 3, which is particularly advantageous for improving the sudsing profile of the detergent composition), or mixtures thereof. The anionic surfactants can be provided in the cleaning compositions of the present invention at levels ranging from 1% to about 80%, more preferably from about 1% to about 50%, and more preferably from about 5% to about 30% by total weight of the compositions.

Preferred nonionic surfactants are those of the formula $R^1(OC_2H_4)_nOH$, wherein $R^1$ is a $C_8$-$C_{18}$ alkyl group or alkyl phenyl group, and n is from about 1 to about 80. Particularly preferred are $C_8$-$C_{18}$ alkyl alkoxylated alcohols having an average degree of alkoxylation from 1 to 20. The nonionic surfactants can be provided in the cleaning compositions at levels ranging from 0.05 wt% to 5 wt%, preferably from 0.1 wt% to 2 wt%.

Other surfactants useful herein include amphoteric surfactants and cationic surfactants. Such surfactants are well known for use in laundry detergents and are typically present at levels from about 0.2 wt% or 1 wt% to about 40 wt% or 50 wt%.

In one particularly preferred embodiment, the liquid laundry detergent composition of the present invention contains: (1) from about 0.2 wt% to about 1 wt% of the cationic polymer, which has a molecular weight of from about 20,000 to about 350,000 Daltons and consists essentially of from 70 mol% to 90 mol% of the first structural unit and from 10 mol% to 30 mol% of the second structural unit; and (2) from 1 wt% to 50 wt% of one or more anionic surfactants selected from the group consisting of $C_{10}$-$C_{20}$ linear or branched alkylethoxy sulfates having an average degree of ethoxylation ranging from 0.5 to 3. The anionic surfactant is $C_{10}$-$C_{20}$ linear or branched alkylethoxy sulfates having an average degree of ethoxylation ranging from 0.5 to 3, which may help to further improve the sudsing benefit of the cationic polymer of the present invention. Such liquid laundry detergent composition further contain from 0.2 wt% to 1 wt% of the silicone-derived antifoaming agent.

In another particularly preferred embodiment, the liquid laundry detergent composition of the present invention contains: (1) about from 0.2 wt% to 1 wt% of the cationic polymer, which has a molecular weight of from 20,000 to 350,000 Daltons and consists essentially of from 65 mol% to 90 mol% of the first structural unit, from 10 mol% to 20 mol% of the second structural unit, and from 1 mol% to 20 mol% of the third structural unit; and (2) from 1 wt% to 50 wt% of one or more anionic surfactants selected from the group consisting of $C_{10}$-$C_{20}$ linear or branched alkylethoxy sulfates having an average degree of ethoxylation ranging from about 0.5 to about 3. The anionic surfactant is $C_{10}$-$C_{20}$ linear or branched alkylethoxy sulfates having an average degree of ethoxylation ranging from 0.5 to 3, which may help to further improve the sudsing benefit of the cationic polymer of the present invention. Such liquid laundry detergent composition further contain from 0.2 wt% to 1 wt% of the silicone-derived antifoaming agent.

In yet another preferred embodiment of the present invention, the liquid laundry detergent composition contains from 0.1 wt% to 5 wt%, preferably from 0.5 wt% to 3 wt%, more preferably from 1 wt% to 1.5 wt%, of one or more fatty acids and/or alkali salts thereof. Suitable fatty acids and/or salts that can be used in the present invention include $C_{10}$-$C_{22}$ fatty acids or alkali salts thereof. Such alkali salts include monovalent or divalent alkali metal salts like sodium, potassium, lithium and/or magnesium salts as well as the ammonium and/or alkylammonium salts of fatty acids, preferably the sodium salt. Preferred fatty acids for use herein contain from 12 to 20 carbon atoms, and more preferably 12 to 18 carbon atoms. Exemplary fatty acids that can be used may be selected from caprylic acid, capric acid, lauric acid, myristic acid, myristoleic acid, palmitic acid, palmitoleic acid, sapienic acid, stearic acid, oleic acid, elaidic acid, vaccenic acid, linoleic acid, linoelaidic acid, $\alpha$-linoelaidic acid, arachidic acid, arachidonic acid, eicosapentaenoic acid, behenic acid, erucic acid, and docosahexaenoic acid, and mixtures thereof. Further, it is preferred that the liquid detergent composition of the present invention comprises one or more saturated fatty acids, such as caprylic acid, capric acid, lauric acid, myristic acid, palmitic acid, stearic acid, arachidic acid, behenic acid, and mixtures thereof. Among the above-listed saturated fatty acids, lauric acid, myristic acid and palmitic acid are particularly preferred.

Additional Laundry Detergent Ingredients

The balance of the laundry detergent typically contains from about 5 wt% to about 70 wt%, or about 10 wt% to about 60 wt% adjunct ingredients. Suitable detergent ingredients include: transition metal catalysts; imine bleach boosters; enzymes such as amylases, carbohydrases, cellulases, laccases, lipases, bleaching enzymes such as oxidases and peroxidases, proteases, pectate lyases and mannanases; source of peroxygen such as percarbonate salts and/or perborate salts, preferred is sodium percarbonate, the source of peroxygen is preferably at least partially coated, preferably completely coated, by a coating ingredient such as a carbonate salt, a sulphate salt, a silicate salt, borosilicate, or mixtures, including mixed salts, thereof; bleach activator such as tetraacetyl ethylene diamine, oxybenzene sulphonate bleach activators such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; suds suppressing systems such as silicone based suds suppressors; brighteners; hueing agents; photobleach; fabric-softening agents such as clay, silicone and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone and vinylimidazole; fabric integrity components such as oligomers produced by the condensation of imidazole and epichlorhydrin; soil dispersants and soil anti-redeposition aids such as alkoxylated polyamines and ethoxylated ethyleneimine polymers; anti-redeposition components such as polyesters and/or terephthalate polymers, polyethylene glycol including polyethylene glycol substituted with vinyl alcohol and/or vinyl acetate pendant groups; perfumes such as perfume microcapsules, polymer assisted perfume delivery systems including Schiff base perfume/polymer complexes, starch encapsulated perfume accords; soap rings; aesthetic particles including coloured noodles and/or needles; dyes; fillers such as sodium sulphate, although it may be preferred for the composition to be substantially free of fillers; carbonate salt including sodium carbonate and/or sodium bicarbonate; silicate salt such as sodium silicate, including 1.6R and 2.0R sodium silicate, or sodium metasilicate; co-polyesters of di-carboxylic acids and diols; cellulosic polymers such as methyl cellulose, carboxymethyl cellulose, hydroxyethoxycellulose, or other alkyl or alkylalkoxy cellulose, and hydrophobically modified cellulose; carboxylic acid and/or salts thereof, including citric acid and/or sodium citrate; fatty acids; and any combination thereof.

It may also be especially preferred for the laundry detergent powder to comprise low levels, or even be essentially free, of builder. The term "essentially free" means that the composition "comprises no deliberately added" amount of that ingredient. In a preferred embodiment, the laundry detergent composition of the present invention comprises no builder.

Method of Making the Cleaning or Laundry Detergent Composition

Incorporation of the cationic polymer and various other ingredients as described hereinabove into cleaning or laundry detergent compositions of the invention can be done in any suitable manner and can, in general, involve any order of mixing or addition.

For example, the cationic polymer as received from the manufacturer can be introduced directly into a preformed mixture of two or more of the other components of the final composition. This can be done at any point in the process of preparing the final composition, including at the very end of the formulating process. That is, the cationic polymer can be added to a pre-made liquid laundry detergent to form the final composition of the present invention.

In another example, the cationic polymer can be premixed with an emulsifier, a dispersing agent or a suspension agent to form an emulsion, a latex, a dispersion, a suspension, and the like, which is then mixed with other components (such as the silicone-derived anti-foaming agent, detersive surfactants, etc.) of the final composition. These components can be added in any order and at any point in the process of preparing the final composition.

A third example involves mixing the cationic polymer with one or more adjuncts of the final composition and adding this premix to a mixture of the remaining adjuncts.

Methods of Using the Laundry Detergent Composition

The present invention is directed to a method of cleaning fabric, the method comprising the steps of: (i) providing a laundry detergent as described above; (ii) forming a laundry liquor by diluting the laundry detergent with water; (iii) washing fabric in the laundry liquor; and (iv) rinsing the fabric in water, wherein after 2 or less rinses, preferably after 1 rinse, the laundry liquor is substantially free of suds, or at least 75%, preferably at least 85%, more preferably 95%, and even more preferably at least 99% of a surface area of the laundry liquor is free from suds.

The present invention is also directed to a method of saving water during laundering, the method comprising the steps of: (i) providing a laundry detergent as described above; (ii) diluting the cleaning composition with wash water in a container to form a laundry liquor; (iii) washing laundry in the laundry liquor; and (iv) rinsing the laundry, wherein after 2 or less rinses, preferably after 1 rinse, the laundry liquor is substantially free of suds.

The method of laundering fabric may be carried out in a top-loading or front-loading automatic washing machine, or can be used in a hand-wash laundry application, which is particularly preferred in the present invention.

Test Methods

Various techniques are known in the art to determine the properties of the compositions of the present invention comprising the cationic polymer. However, the following assays must be used in order that the invention described and claimed herein may be fully understood.

Test 1: Measurement of Weight Average Molecular Weight (Mw)

The weight-average molecular weight (Mw) of a polymer material of the present invention is determined by Size Exclusion Chromatography (SEC) with differential refractive index detection (RI). One suitable instrument is Agilent® GPC-MDS System using Agilent® GPC/SEC software, Version 1.2 (Agilent, Santa Clara, USA). SEC separation is carried out using three hydrophilic hydroxylation polymethyl methacrylate gel columns (Ultrahydrogel 2000-250-120 manufactured by Waters, Milford, USA) directly joined to each other in a linear series and a solution of 0.1M sodium chloride and 0.3% trifluoroacetic acid in DI-water, which is filtered through 0.22 $\mu$m pore size GVWP membrane filter (MILLIPORE, Massachusetts, USA). The RI detector needs to be kept at a constant temperature of about 5-10°C above the ambient temperature to avoid baseline drift. It is set to 35°C. The injection volume for the SEC is 100 $\mu$L. Flow rate is set to 0.8 mL/min. Calculations and calibrations for the test polymer measurements are conducted against a set of 10 narrowly distributed Poly(2-vinylpyridin) standards from Polymer Standard Service (PSS, Mainz Germany) with peak molecular weights of: Mp=1110 g/mol; Mp=3140 g/mol; Mp=4810 g/mol; Mp=11.5k g/mol; Mp=22k g/mol; Mp=42.8k g/mol; Mp=118k g/mol; Mp=256k g/mol; Mp=446k g/mol; and Mp=1060k g/mol.

Each test sample is prepared by dissolving the concentrated polymer solution into the above-described solution of 0.1M sodium chloride and 0.3% trifluoroacetic acid in DI water, to yield a test sample having a polymer concentration of 1 to 2 mg/mL. The sample solution is allowed to stand for 12 hours to fully dissolve, and then stirred well and filtered through a 0.45 $\mu$m pore size nylon membrane (manufactured by WHATMAN, UK) into an auto sampler vial using a 5mL syringe. Samples of the polymer standards are prepared in a similar manner. Two sample solutions are prepared for each test polymer. Each solution is measured once. The two measurement results are averaged to calculate the Mw of the test polymer.

For each measurement, the solution of 0.1M sodium chloride and 0.3% trifluoroacetic acid in DI water is first injected onto the column as the background. A correction sample (a solution of 1 mg/mL polyethylene oxide with Mp=111.3k g/mol) is analysed six times prior to other sample measurements, so as to verify repeatability and accuracy of the system.

The weight-average molecular weight (Mw) of the test sample polymer is calculated using the software that accompanies the instrument and selecting the menu options appropriate for narrow standard calibration modelling. A third-order polynomial curve is used to fit the calibration curve to the data points measured from the Poly(2-vinylpyridin) standards. The data regions used for calculating the weight-average molecular weight are selected based upon the strength of the signals detected by the RI detector. Data regions where the RI signals are greater than 3 times the respective baseline noise levels are selected and included in the Mw calculations. All other data regions are discarded and excluded from the Mw calculations. For those regions which fall outside of the calibration range, the calibration curve is extrapolated for the Mw calculation.

To measure the average molecular weight of a test sample containing a mixture of polymers of different molecular weights, the selected data region is cut into a number of equally spaced slices. The height or Y-value of each slice from the selected region represents the abundance (Ni) of a specific polymer (i), and the X-value of each slice from the selected region represents the molecular weight (Mi) of the specific polymer (i). The weight average molecular weight (Mw) of the test sample is then calculated based on the equation described hereinabove, i.e., Mw = $(\sum i\ Ni\ Mi2) / (\sum i\ Ni\ Mi)$.

Test 2: Qualification of the Monomers by HPLC

Each of the monomers in the cationic polymer is quantified by high pressure liquid chromatography (HPLC) according to the follows:

| Measuring device: | L-7000 series (Hitachi Ltd.) |
|---|---|
| Detector: | UV detector, L-7400 (Hitachi Ltd.) |
| Column: | SHODEX RSpak DE-413 (product of Showa Denko K. K.) |
| Temperature: | 40°C |
| Eluent: | 0.1% phosphoric acid aqueous solution |
| Flow Velocity: | 1.0 mL/ min |

Test 3: Performance Evaluation (Sudsing Profile Test)

The sudsing profile of the detergent composition herein are measured by employing a suds cylinder tester (SCT). The SCT has a set of 8 cylinders. Each cylinder is typically 60 cm long and 9 cm in diameter and may be together rotated at a rate of 20-22 revolutions per minute (rpm). This method is used to assay the performance of laundry detergent to obtain a reading on ability to generate suds as well as its suds stability and rinse suds performance. The following factors affect results and therefore should be controlled properly: (a) concentration of detergent in solution, (b) water hardness, (c) water temperature of water, (d) speed and number of revolutions, (e) soil load in the solution, and (f) cleanliness of the inner part of the tubes.

The performance is determined by comparing the suds height generated during the washing stage by the laundry detergent containing the cationic polymer of the present invention or a comparative cationic polymer not falling within the scope of the present invention, versus control laundry detergent that does not contain any cationic polymer. The height of suds generated by each test composition is measured by recording the total suds height (i.e., height of suds plus wash liquor) minus the height of the wash liquor alone.

1. Weigh 1.5 grams of product and dissolve it in 300ml of water with a water hardness of about 16gpg for at least 15 min to form a solution containing the test product at about 5000ppm. Dissolve the samples simultaneously.

2. Pour the sample aliquot to the tubes. Put in the rubber stopper and lock the tubes in place.

3. Spin for 10 revolutions. Lock in an upright position. Wait 1 min and check the suds height very quickly (~ 10 sec) left to right. Record the total suds height (i.e., height of the suds plus wash liquor) and the height of the wash liquor alone. This marks the after 10 revolutions data.

4. Spin for additional 20 revolutions. This marks the after 30 revolutions data. Take recordings from left to right.

5. Spin for 20 revolutions more. This marks the after 50 revolutions data. Take readings from left to right. Repeat this step one more time; thus, the data gathered are for after 70 revolutions.

6. Open the tubes. Add 1 piece of fabric with clay and ¼ piece of fabric with dirty cooking oil (DCO) into each tube. Put in the rubber stopper. Spin for 20 revolutions. This marks the after 90 revolutions data. Take readings. Repeat this step one time; thus, the data gathered are for after 110 revolutions.

The addition of the artificial soil is intended to mimic the real world washing conditions where more soils dissolve into the wash liquor from the fabrics being wash. Therefore, this test is relevant for determing the initial sudsing profile of a composition and its sudsing profile in a washing cycle.

(Note: Preparation of fabric with clay is conduted as follows:

- Disperse 20g of BJ-clay (clay collected from 15cm below the earth surface in Beijing, China) into 80 ml of DI water via agitation to make a clay suspension.
- Keep agitating the suspension during the preparation process, while brushing 2g of such clay suspension onto the center of a 10cm*10cm cotton fabric to form a round shape stain (d=5cm).

- The cotton fabric with clay is left dry at room temperature and then used for the performance evaluation.


Preparation of fabric with DCO is conducted as follows:

- 100 grams of peanut oil is used to fry 20 grams of salty fish for 2 hrs at 150-180°C to form the dirty cooking oil (DCO).
- Brush 0.6ml of the DCO onto the center of a 10cm*10cm cotton fabric to form a round shape stain (d=5cm).
- Cut the 10cm*10cm cotton fabric into 4 equal pieces and use one for the performance evaluation.)


7. Pour 37.5 ml solution out of the tube gently into beaker and add 262.5 ml of water with desired hardness level into the beaker to make a toal of 300 ml 1/8 diluted solution. Dispose the remaining solution in the tube and wash the tube with tap water. Pour the 300 ml 1/8 diluted solution into the same tube.

8. Spin for 20 revolutions. This marks the after 130 revolutions data. Take readings from left to right. Repeat this step one time; thus data gathered are for after 150 revolutions.

9. Pour 150 ml solution out of the tube gently into beaker and add 150 ml water with desired hardness level into the beaker to make a total of 300ml 1/16 diluted solution. Dispose the remaining solution in the tube and wash the tube with tap water. Pour the 300 mL 1/16 diluted solution into the same tube.Repeat steps 8. Data gathered are for 190 revolutions data.

10. In a typical sudsing profile test, Steps 1-9 are repeated at least once to ensure the test repeatibility.

11. Data Analysis:

Breakdown of the Suds Category

| Flush Suds | 10 revolutions data | Flush Suds |
|---|---|---|
| Suds generation | 30-70 revolutions data | Washing Cycle Wash data analysis is focused on Suds stability |
| Suds stability | 90-110 revolutions data | |
| 1/8 Rinse | 130-150 revolutions data | Rinsing Cycle: Rinse data analysis is focused on Rinse (1:8) |
| 1/16 Rinse | 170-190 revolutions data | Rinsing Cycle: 1/16 Rinse |

Average suds height of different categories described above are calculated by average the height data of each replicate.

Washing Suds Index (WSI) is calculated by the average suds height generated by the control sample ($WSH_C$) during the wash cycle when suds stability is observed (i.e., 90-110 revolutions) divided by that generated by a test sample ($WSH_T$), i.e., containing either a cationic polymer of the present invention or a comparative cationic polymer not within the scope of the present invention, and then converted into a percentage, as follows:

$$\text{Washing Suds Index} = \frac{WSH_T}{WSH_C} \times 100\%.$$

The WSI is indicative of how much suds is generated during the wash cycle by a test sample containing a cationic polymer (either an inventive cationic polymer with the specific monomeric composition and molecular weight as defined hereinabove, or a comparative cationic polymer not falling within the scope of the present invention) that may have adverse impact on the wash suds, in comparison with the suds generated by a control sample that does not contain any of such cationic polymer. Therefore, the higher the WSI percentage, the more suds are generated during wash, and the better the performance.

Rinse Suds Index (RSI) is calculated by the average suds height generated by the control sample ($RSH_C$) during the 1/8 rinse cycle (i.e., 130-150 revolutions) divided by that generated by a test sample ($RSH_T$), and then converted into a percentage, as follows:

$$\text{Rinse Suds Index} = \frac{RSH_T}{RSH_C} \times 100\%.$$

The RSI, on the other hand, is indicative of how much suds is left during the rinse cycle by a test sample containing a cationic polymer (either an inventive cationic polymer with the specific monomeric composition and molecular weight as defined hereinabove, or a comparative cationic polymer not falling within the scope of the present invention) that may be effective in reducing the rinse suds, in comparison with the suds left by a control sample that does not contain any of such cationic polymer. Therefore, the lower the RSI percentage, the more suds reduction is effectuated during rinse, and the better the performance.

An optimal sudsing profile as defined within the meaning of this invention includes a WSI of more than 70% and a RSI of less than 40%, preferably a WSI of more than 80% and a RSI of less than 30%, and more preferably a WSI of more than 100% (i.e., a suds boosting effect during wash) and a RSI of less than 20%.

Test 4: Fabric Whiteness Loss Test (Fast Wash Method)

This test is intended to measure the ability of a laundry detergent to prevent loss in whiteness (*i.e.*, whiteness maintenance) of fabrics. Whiteness maintenance of fabrics is evaluated by image analysis after single or multi-cycle washes. Typically, "whiteness" can be reported by its whiteness index, which is conveniently converted from CIELAB, which is an internationally recognized color scale system developed by CIE ("Commission International de l'Eclairage"). CIE color scale for whiteness is the most commonly used whiteness index and refers to measurements made under D65 illumination, which is the standard representation of outdoor daylight. In technical terms, whiteness is a single number index referencing the relative degree of whiteness (of near-white materials under specific lighting conditions), so the higher the number, the whiter the material. As an example, for a perfect reflecting, non-fluorescent white material, the CIE whiteness index ($L^*$) would be 100.

The steps for assaying the whiteness maintenance of the laundry detergent of the present invention are as follows:

(1) Formulation preparation: Formulate detergent compositions with or without polymers of interest.

(2) Solution Preparation:

Solution A: Dissolve laundry detergent prepared in step (1) with deionized water (DI water) at the concentration of 7500ppm (Solution A need to be more than 10 ml).

Solution B: prepared according to the following procedure. Into a 1 L beaker, add 4.829 g $CaCl_2 \cdot 2H_2O$ and 1.669 g $MgCl_2 \cdot 6H_2O$. Add 800 mL of DI water. Using a stir bar and stirring plate, stir the solution until the mixture is dissolved and the solution turns clear. Pour the solution into a 1 L volumetric flask and fill to 1 L line.

Solution C: Disperse 2.25g of Arizona clay (Nominal 0-3 micron Arizona Test Dust, Powder Technology Inc.) into 50 ml of DI water via agitation, this solution is agitated during the whole test solution preparation process.

(3) Transfer 10 mL of the solution A into 40 mL plastic vials. Add clean magnets for additional agitation.

(4) Add 1 mL of Solution B into the plastic vials above.

(5) Add 1 mL of Solution C into the plastic vials above.

(6) Add 3 mL of DI water into the plastic vials above.

(7) Add 6.1 $\mu$L technical body soil into the plastic vials above. The technical body soil composition is prepared according to the following table:

Table I

| Ingredients | wt% | Supplier |
|---|---|---|
| Coconut Oil | 15 | Gold Metal Products |
| Oleic Acid | 15 | Spectrum |
| Paraffin Oil | 15 | EMD |
| Olive Oil | 15 | Spectrum |
| Cottonseed Oil | 15 | Spectrum |
| Squalene Oil | 5 | Alfa Aesar |
| Cholesterol | 5 | Amresco, Inc |
| Myristic Acid | 5 | SIGMA |
| Palmitic Acid | 5 | SIGMA |
| Stearic Acid | 5 | SIGMA |

(8) Test fabrics are selected from 1.5 cm diameter polyester fabrics (PW19) and/or 1.5 cm diameter cotton fabrics (CW98) purchased from Empirical Manufacturing Company (*Blue Ash, Cincinnati*). Add eight of the polyester fabrics and eight cotton fabrics to solution prepared in Step (7). Secure 40 mL wash vial tightly to Wrist Action Shaker Model 75 (*Burrell Scientific, Pittsburgh, Pennsylvania*). Use a timer and run the wash for 30 minutes. At the end of the wash empty the contents of the plastic vial wash solution on a Buchner funnel. Transfer the test fabric disks to another 40 mL vial and add 14 mL DI water of rinse solution.

(9) To prepare the rinse solution, add 1 ml solution B to 14 mL of DI water. Secure vial to Wrist Action Shaker and rinse for 3 minutes. At the end of the rinse remove from Wrist Action Shaker and place the test fabrics on black plastic board template. Let air dry for at least two hours. For multi-cycle washes, just repeat the above steps.

(10) For each test fabric, two whiteness index measurements from before (*i.e.,* initial) and after the wash cycle (*i.e.,* treated) are taken using the CIELab color parameters with a Datacolor spectrometer. The relative whiteness index (*i.e.,* whiteness loss) between the initial unwashed fabric and final washed fabric is reported.

(11) A Whiteness Loss Index (*i.e.,* $\Delta$WLI), representing the normalized difference in the whiteness index measurements between the initial fabric (before treatment) and the treated fabric, is determined for a tested fabric sample treated by a sample detergent composition, and represented by the following calculation:

$$\Delta\mathrm{WLI} = Initial\ Whiteness\ Index - Treated\ Whiteness\ Index.$$

The larger the $\Delta$WLI, the more whiteness loss in the treated fabric is observed, which means that the performance of the laundry detergent used for treating the fabric sample is poorer from the whiteness perspective. If the $\Delta$WLI is negative, it means that the treated fabric is actually whiter than the initial fabric, which means that the washing not only does not reduce the whiteness, but actually increases it.

(12) Further, a Relative Whiteness Loss Percentage (WLP) is calculated for each test sample by comparing the $\Delta$WLI measured for such test sample ($\Delta$WLI$_T$), which may contain either an inventive cationic polymer of the present invention or a comparative cationic polymer not falling within the scope of the present invention, with the $\Delta$WLI measured for a control detergent composition that does not contain any cationic polymer ($\Delta$WLI$_C$), according to the following equation:

$$\mathrm{WLP} = \frac{\Delta WLI_T - \Delta WLI_C}{\Delta WLI_C} \times 100\%$$

Since WLP is the relative fabric whiteness loss (expressed in percentage) caused by a detergent composition containing a cationic polymer (which is typically known to cause some fabric whiteness loss) over that caused by a control detergent composition not containing such cationic polymer, a larger WLP is indicative of more relative fabric whiteness loss observed in comparison with the control sample. Therefore, it is in turn indicative of poorer whiteness performance of the cationic polymer, i.e., its presence causes more fabric whiteness loss in the laundry detergent. If the WLP is a negative number, it is indicative of the fact that the presence of the cationic polymer not only does not cause fabric whiteness loss, but actually imparts whiteness benefit to the fabric, which is the most desirable.

EXAMPLES

I. Cationic Polymer Examples

Following is a list of exemplary cationic polymers within the scope of the present invention:

Table II

|  | AAm (mol%) | DADMAC (mol%) | VP (mol%) | MW (K Dalton) | Calculated Charge Density (meq/g) |
|---|---|---|---|---|---|
| Polymer 1 | 87.2 | 12.8 | 0 | 102.7 | 1.55 |
| Polymer 2* | 76 | 24 | 0 | 61.5 | 2.59 |
| Polymer 3 | 84.1 | 15.9 | 0 | 350.7 | 1.86 |
| Polymer 4 | 84.1 | 15.9 | 0 | 118.8 | 1.86 |
| Polymer 5 | 84.1 | 15.9 | 0 | 56.6 | 1.86 |

(continued)

| | AAm (mol%) | DADMAC (mol%) | VP (mol%) | MW (K Dalton) | Calculated Charge Density (meq/g) |
|---|---|---|---|---|---|
| Polymer 6 | 69 | 11 | 20 | 656.5 | 1.24 |
| Polymer 7 | 73 | 23 | 4 | 212.4 | 2.46 |
| Polymer 8 | 71 | 17 | 12 | 517.2 | 1.86 |
| Polymer 9 | 78 | 11 | 11 | 441.9 | 1.29 |
| Polymer 10 | 79.9 | 16.2 | 3.9 | 294.1 | 1.86 |
| Polymer 11 | 79.9 | 16.2 | 3.9 | 113.3 | 1.86 |
| Polymer 12 | 79.9 | 16.2 | 3.9 | 50.6 | 1.86 |
| *Merquat™ 740 from the Lubrizol Corporation (Wickliffe, OH). | | | | | |

Seven (7) test liquid laundry detergent compositions are prepared, including: (1) a control composition containing no cationic polymer, (2) a first inventive composition containing 0.5 wt% of the inventive polymer 3 as described hereinabove in Table II of Example I; (3) a second inventive composition containing 0.5 wt% of the inventive polymer 4 as described hereinabove in Table II of Example I; (4) a third inventive composition containing 0.5 wt% of the inventive polymer 5 as described hereinabove in Table II of Example I; (5) a first inventive composition containing 0.5 wt% of the inventive polymer 11 as described hereinabove in Table II of Example I; (6) a second inventive composition containing 0.5 wt% of the inventive polymer 12 as described hereinabove in Table II of Example I; and (7) a third inventive composition containing 0.5 wt% of the inventive polymer 13 as described hereinabove in Table II of Example I. Following is the detailed compositional breakdown of the control composition and the six inventive compositions:

Table III

| Ingredients (wt%) | (1) | (2) | (3) | (4) | (5) | (6) | (7) |
|---|---|---|---|---|---|---|---|
| | Control | | | | | | |
| Inventive Polymer 3 | -- | 0.5 | -- | -- | -- | -- | -- |
| Inventive Polymer 4 | -- | -- | 0.5 | -- | -- | -- | -- |
| Inventive Polymer 5 | -- | -- | -- | 0.5 | -- | -- | -- |
| Inventive Polymer 10 | -- | -- | -- | -- | 0.5 | -- | -- |
| Inventive Polymer 11 | -- | -- | -- | -- | -- | 0.5 | -- |
| Inventive Polymer 12 | -- | -- | -- | -- | -- | -- | 0.5 |
| C24AE3S Paste | 8.320 | 8.320 | 8.320 | 8.320 | 8.320 | 8.320 | 8.320 |
| HLAS | 5.520 | 5.520 | 5.520 | 5.520 | 5.520 | 5.520 | 5.520 |
| Nonionic 24-7 | 1.210 | 1.210 | 1.210 | 1.210 | 1.210 | 1.210 | 1.210 |
| Citric Acid | 2.000 | 2.000 | 2.000 | 2.000 | 2.000 | 2.000 | 2.000 |
| Fatty acid (DTPK) | 1.210 | 1.210 | 1.210 | 1.210 | 1.210 | 1.210 | 1.210 |
| Subtotal Builder | 3.210 | 3.210 | 3.210 | 3.210 | 3.210 | 3.210 | 3.210 |
| Boric acid | 2.100 | 2.100 | 2.100 | 2.100 | 2.100 | 2.100 | 2.100 |
| DTPA | 0.190 | 0.190 | 0.190 | 0.190 | 0.190 | 0.190 | 0.190 |
| FWA-49 | 0.057 | 0.057 | 0.057 | 0.057 | 0.057 | 0.057 | 0.057 |
| Hexamethylene diamine (ethoxylated, quaternized, sulfated) 70% | 0.460 | 0.460 | 0.460 | 0.460 | 0.460 | 0.460 | 0.460 |
| 1, 2 propanediol | 1.210 | 1.210 | 1.210 | 1.210 | 1.210 | 1.210 | 1.210 |
| NaOH | 3.130 | 3.130 | 3.130 | 3.130 | 3.130 | 3.130 | 3.130 |

(continued)

| Ingredients (wt%) | (1) | (2) | (3) | (4) | (5) | (6) | (7) |
|---|---|---|---|---|---|---|---|
| | Control | | | | | | |
| Acticide MBS | 0.015 | 0.015 | 0.015 | 0.015 | 0.015 | 0.015 | 0.015 |
| Proxel GXL | 0.001 | 0.001 | 0.001 | 0.001 | 0.001 | 0.001 | 0.001 |
| Silicone emulsion | 0.003 | 0.003 | 0.003 | 0.003 | 0.003 | 0.003 | 0.003 |
| Andromeda | 0.600 | 0.600 | 0.600 | 0.600 | 0.600 | 0.600 | 0.600 |
| Liquitint Blue 297 | 0.002 | 0.002 | 0.002 | 0.002 | 0.002 | 0.002 | 0.002 |
| Water | Balance | Balance | Balance | Balance | Balance | Balance | Balance |
| Total: | 100.000 | 100.000 | 100.000 | 100.000 | 100.000 | 100.000 | 100.000 |

Sudsing Profile Test as described hereinabove is carried out for each of the seven (7) test liquid compositions by dissolving each composition in water having a water hardness level of 16 gpg to form a laundering liquor containing 5000ppm of the test composition. The Wash Suds Index (WSI) and Rinse Suds Index (RSI) of all six (6) inventive compositions are calculated based on the wash suds volume and rinse suds volume measured for these two compositions in comparison with the control composition. Following are the measurement results:

Table IV

| | Control (1) | (2) | (3) | (4) | (5) | (6) | (7) |
|---|---|---|---|---|---|---|---|
| Wash Suds Stability* (cm) | 28.24 | 25.38 | 23.18 | 20.98 | 25.58 | 23.18 | 20.20 |
| 1/8 Rinse Suds** (cm) | 8.18 | 1.76 | 2.14 | 1.45 | 1.90 | 1.93 | 1.43 |
| Wash Suds Index (WSI) | -- | 90% | 82% | 74% | 91% | 82% | 72% |
| Rinse Suds Index (RSI) | -- | 22% | 26% | 18% | 23% | 24% | 17% |
| * Measured at 90-110 revolutions.<br>**Measured at 130-150 revolutions. | | | | | | | |

All six inventive compositions containing inventive cationic polymers of the present invention provide optimized sudsing profiles characterized by a satisfactory wash suds volume (a WSI of more than 70%) and significantly lower rinse suds volume (a RSI of less than 40%) in comparison with the control composition.

III. Sudsing Benefit of the Inventive Cationic Polymer across Different Dosing Levels

The cationic polymers of the present invention also demonstrate observable sudsing benefit across different detergent dosing levels, i.e., the laundry detergent composition containing such cationic polymers may be added into water at different amounts to form laundering liquor of different detergent concentrations. Because different consumers may have very different dosing habits when it comes to laundry detergents, with some more prone to over-dosing and others more prone to under-dosing, it is an important advantage if the sudsing benefit of the present invention is observable across a wider dosing range, thereby accommodating different consumer dosing habits.

A control liquid detergent composition containing no cationic polymer and an inventive liquid detergent composition containing 0.5 wt% of the inventive polymer 2 as described hereinabove in Table II of Example I, which contains about 76 mol% of AAm and 24 mol% of DADMAC with a molecular weight of about 61.5K Daltons, are provided. Following is the detailed compositional breakdown of the control composition and the inventive composition:

Table V

| | Control Composition (wt%) | Inventive Composition (wt%) |
|---|---|---|
| Inventive Polymer 2 | -- | 0.500 |
| C24AE3S Paste | 8.320 | 8.320 |

(continued)

| | Control Composition (wt%) | Inventive Composition (wt%) |
|---|---|---|
| HLAS | 5.520 | 5.520 |
| Nonionic 24-7 | 1.210 | 1.210 |
| Citric Acid | 2.000 | 2.000 |
| Fatty acid (Double topped whole cut palm kernel fatty acid or DTPK) | 1.210 | 1.210 |
| Subtotal Builder | 3.210 | 3.210 |
| Boric acid | 2.100 | 2.100 |
| DTPA | 0.190 | 0.190 |
| FWA-49 | 0.057 | 0.057 |
| Water | Balance | Balance |
| Total: | 100.000 | 100.000 |

Sudsing Profile Test as described hereinabove is carried out for both the control composition and the inventive composition by dissolving each composition in water having a water hardness level of 16 gpg in different quantities to form laundering liquors of different dosing levels, including 2500ppm (under-dose 2X), 5000ppm (normal dosage), 10000ppm (over-dose at 2X), and 15000ppm (over-dose at 3X). The Wash Suds Index (WSI) and Rinse Suds Index (RSI) of the inventive composition at different dosing levels are calculated based on the wash suds volume and rinse suds volume measured thereof at different dosing levels in comparison with the control composition at similar dosing levels. Following are the measurement results:

Table VI

| Dosing Level | 2500ppm | | 5000ppm | | 10000ppm | | 15000ppm | |
|---|---|---|---|---|---|---|---|---|
| | Control Sample | Inventive Sample | Control Sample | Inventive Sample | Control Sample | Inventive Sample | Control Sample | Inventive Sample |
| Suds Stability* (cm) | 29.03 | 15.73 | 37.53 | 28.90 | 40.90 | 40.15 | 38.10 | 42.83 |
| WSI | -- | 54% | -- | 77% | -- | 98% | -- | 112% |
| First Rinse** (cm) | 4.08 | 1.13 | 11.58 | 2.90 | 19.53 | 7.68 | 24.08 | 13.60 |
| RSI | -- | 28% | -- | 25% | -- | 39% | -- | 56% |
| * Measured at 90-110 revolutions. **Measured at 1/8 rinse with 130-150 revolutions. | | | | | | | | |

The data shows that the sudsing benefit of the cationic polymer of the present invention is observable across different dosing levels. More interestingly, such cationic polymer at 3X overdose (15000ppm) exhibits a suds boosting effect during the wash cycle (i.e., a WSI of more than 100%), while at the same time still providing significant suds reduction during the rinse cycle (i.e., a RSI of less than 60%).

IV. Comparative Tests Showing Sudsing Profiles of Cationic Polymers with Different AAm/DADMAC Molar Percentages and/or Different Molecular Weights

Thirteen (13) test liquid laundry detergent compositions are prepared, including: (1) a control composition containing no cationic polymer, (2) 5 inventive compositions, each of which containing the same ingredients as the control composition but further including 0.5 wt% of an inventive polymer within the scope of the present invention; and (3) 7 comparative compositions, each of which containing the same ingredients as the control composition but further including 0.5 wt% of a comparative polymer that has either AAm/DADMAC molar percentages falling outside of the scope of the present invention, or a molecular weight falling outside of the scope of the present invention. Following is the detailed compositional breakdown of the control composition:

Table VII

| Ingredients | Wt% |
|---|---|
| C24AE3S Paste | 8.320 |
| HLAS | 5.520 |
| Nonionic 24-7 | 1.210 |
| Citric Acid | 2.000 |
| Fatty acid (DTPK) | 1.210 |
| Subtotal Builder | 3.210 |
| Boric acid | 2.100 |
| DTPA | 0.190 |
| FWA-49 | 0.057 |
| Hexamethylene diamine (ethoxylated, quaternized, sulfated) 70% | 0.460 |
| 1, 2 propanediol | 1.210 |
| NaOH | 3.130 |
| Acticide MBS | 0.015 |
| Proxel GXL | 0.001 |
| Silicone emulsion | 0.003 |
| Andromeda | 0.600 |
| Liquitint Blue 297 | 0.002 |
| Water | Balance |
| Total | 100.000 |

Sudsing Profile Test as described hereinabove is carried out for each of these thirteen (13) test compositions by dissolving each composition in water having a water hardness level of 16 gpg to form a laundering liquor containing 5000ppm of the test composition. For certain compositions, the Sudsing Profile Test is repeated several times (the number of actual tests conducted for each test composition is listed at below), and the suds data provided hereinafter is obtained by averaging the data obtained from the repetition. The Wash Suds Index (WSI) and Rinse Suds Index (RSI) of each of the seven (7) comparative compositions and five (5) inventive compositions are calculated based on the wash suds volume and rinse suds volume measured for such compositions in comparison with the control composition. Following are the measurement results:

Table VIII

| Polymer in Composition | AAm (mol%) | DADMAC (mol%) | MW (K Dalton) | Calculated Charge Density (meq/g) | Total Test Times | Suds Stability (cm)* | First Rinse Suds (cm)** | WSI | RSI |
|---|---|---|---|---|---|---|---|---|---|
| Nil polymer (Control) | -- | -- | -- | NA | 8 | 30.5 | 9.1 | -- | -- |
| Inventive Polymer 1 | 87.2 | 12.8 | 102.7 | 1.55 | 2 | 22.0 | 2.0 | 72% | 22% |
| Inventive Polymer 2 | 76 | 24 | 61.5 | 2.59 | 5 | 24.9 | 3.1 | **82%** | **34%** |
| Inventive Polymer 3 | 84.1 | 15.9 | 350.7 | 1.86 | 2 | 25.4 | 1.8 | **83%** | **20%** |
| Inventive Polymer 4 | 84.1 | 15.9 | 118.8 | 1.86 | 2 | 23.2 | 2.1 | **76%** | **23%** |
| Inventive Polymer 5 | 84.1 | 15.9 | 56.6 | 1.86 | 2 | 22.8 | 1.7 | **75%** | **19%** |
| Comparative Polymer 1 | 16.4 | 83.6 | 40.9 | 5.69 | 1 | 30.5 | 6.6 | 100% | 73% |
| Comparative Polymer 2 | 16.4 | 83.6 | 18.9 | 5.69 | 1 | 28.1 | 7.3 | 92% | 80% |
| Comparative Polymer 3 | 30 | 70 | 84.8 | 5.20 | 1 | 28.5 | 4.8 | 93% | 53% |
| Comparative Polymer 4 | 50 | 50 | 18.1 | 4.30 | 1 | 29.2 | 5.7 | 96% | 63% |
| Comparative Polymer 5[a] | 70 | 30 | 3832.0 | 3.05 | 1 | 30.7 | 5.5 | 101% | 60% |
| Comparative Polymer 6[b] | 70 | 30 | 3862.0 | 3.05 | 1 | 32.0 | 4.9 | 105% | 54% |
| Comparative Polymer 7[c] | 70 | 30 | 3552.2 | 3.05 | 1 | 34.1 | 5.2 | 112% | 57% |

* Measured at 90-110 revolutions.

**Measured at 130-150 revolutions.

[a] Merquat™ 550 commercially available from from the Lubrizol Corporation (Wickliffe, OH).

[b] Merquat™ 550L commercially available from from the Lubrizol Corporation (Wickliffe, OH).

[c] Merquat™ S commercially available from from the Lubrizol Corporation (Wickliffe, OH).

The comparative polymers contained in the comparative compositions have either AAm/DADMAC molar percentages or molecular weights falling outside of the scope of the present invention. The above data shows that only the inventive polymers with the appropriate AAm/DADMAC molar percentages and molecular weights provide optimal sudsing profiles, i.e., having a satisfactory wash suds volume quantified by a WSI of more than 70% and a sufficiently reduced rinse suds volume quantified by a RSI of less than 40%.

V. Comparative Tests Showing Fabric Whiteness Loss of Cationic Polymers of Different Molecular Weight

Three (3) liquid laundry detergent compositions are prepared, including: (1) a control composition containing no cationic polymer, (2) a comparative composition containing 0.5 wt% of a comparative polymer, Merquat™ S, which contains about 70 mol% of AAm and about 30 mol% of DADMAC with a molecular weight of about 3552.2K Dalton; (3) an inventive composition containing 0.5 wt% of the inventive polymer 2 as described hereinabove in Table II of Example I, Merquat™ 740, which contains about 76 mol% of AAm and 24 mol% of DADMAC with a molecular weight of about 61.5K Dalton. Following is the detailed compositional breakdown of the control composition, the comparative composition, and the inventive composition:

Table IX

| | Control Composition (wt%) | Comparative Composition (wt%) | Inventive Composition (wt%) |
|---|---|---|---|
| Comparative Polymer | -- | 0.500 | -- |
| Inventive Polymer 2 | -- | -- | 0.500 |
| C24AE3S Paste | 8.320 | 8.320 | 8.320 |
| HLAS | 5.520 | 5.520 | 5.520 |
| Nonionic 24-7 | 1.210 | 1.210 | 1.210 |
| Citric Acid | 2.000 | 2.000 | 2.000 |
| Fatty acid (DTPK) | 1.210 | 1.210 | 1.210 |
| Subtotal Builder | 3.210 | 3.210 | 3.210 |
| Boric acid | 2.100 | 2.100 | 2.100 |
| DTPA | 0.190 | 0.190 | 0.190 |
| FWA-49 | 0.057 | 0.057 | 0.057 |
| Hexamethylene diamine (ethoxylated, quaternized, sulfated) 70% | 0.460 | 0.460 | 0.460 |
| 1, 2 propanediol | 1.210 | 1.210 | 1.210 |
| NaOH | 3.130 | 3.130 | 3.130 |
| Acticide MBS | 0.015 | 0.015 | 0.015 |
| Proxel GXL | 0.001 | 0.001 | 0.001 |
| Silicone emulsion | 0.003 | 0.003 | 0.003 |
| Andromeda | 0.600 | 0.600 | 0.600 |
| Liquitint Blue 297 | 0.002 | 0.002 | 0.002 |
| Water | Balance | Balance | Balance |
| Total | 100.000 | 100.000 | 100.000 |

Fabric Whiteness Loss Test using the fast wash method as described in Test 4 hereinabove is carried out for each of these three (3) test compositions. The fabric used for conducting the test is polyester.
The Whiteness Loss Index (i.e., ∆WLI) is measured for each of the control composition, the comparative composition, and the inventive composition. The Relative Whiteness Loss Percentage (WLP) of both the comparative composition and inventive composition are calculated based on their ΔWLI in comparison with that of the control composition. Following are the measurement results:

Table X

|  | Control Composition | Comparative Composition | Inventive Composition |
|---|---|---|---|
| ΔWLI | 26.8 | 53.5 | 13.9 |
| WLP | 0% | 99.6% | -48.1% |
| * Measured at 90-110 revolutions. **Measured at 130-150 revolutions. | | | |

As mentioned hereinabove, WLP is the relative percentage fabric whiteness loss caused by a detergent composition containing a cationic polymer (either an inventive polymer or a comparative polymer) over that caused by a control detergent composition not containing such cationic polymer, the larger the WLP, the more relative fabric whiteness loss is caused by addition of the specific cationic polymer, which is indicative of poorer whiteness performance of such cationic polymer.

The comparative polymer contained in the comparative composition and the inventive polymer 2 contained in the inventive composition have similar AAm and DADMAC molar percentages, but the inventive polymer 2 has a significantly lower molecular weight that falls within the scope of the present invention, while the comparative polymer has a high molecular weight that does not fall within the scope of the present invention. As shown hereinabove, the comparative composition has a WLP as high as 99.6%, which is indicative of very poor whiteness performance of the comparative cationic polymer. In contrast, the inventive composition has a negative WLP of -48.1%, which indicates that the presence of the inventive cationic polymer 2 not only does not cause fabric whiteness loss, but actually imparts whiteness benefit to the fabric tested.

VI. Exemplary Laundry Detergent Compositions

(A). Heavy Duty Powder Detergents

The following heaving duty powder detergents are prepared by mixing the ingredients listed below *via* conventional processes. Such heavy duty liquid detergents are used to launder fabrics that are then dried by line drying and/or machine drying. Such fabrics may be treated with a fabric enhancer prior to and/or during drying. Such fabrics exhibit a clean appearance and have a soft feel.

Table XI

|  | Ex. 1 | Ex. 2 | Ex. 3 |
|---|---|---|---|
| Ingredient | wt% | wt% | wt% |
| LAS (Non-sulphated anionic surfactant) | 10.0 | 15.0-16.0 | 7.0 |
| Mixture of alkyl sulphate surfactants | 1.5 | 1.5-2 | 1.5 |
| Cationic surfactant | 0.0-1.0 | 0.0-1.5 | 0.0-1.0 |
| Non ionic surfactant | 0.0-1.0 | 0.0-1.5 | 0.0-1.0 |
| Zeolite | 0.0-3.0 | 6.0-10.0 | 0.0-3.0 |
| Polymeric dispersing or soil release agents | 1.0-3.0 | 1.0-4.0 | 1.0-3.0 |
| Bleach and bleach activator | 0.0-5.0 | 4.0-6.0 | 2-3.0 |
| Silicate | 7.0-9.0 | -- | 5.0-6.0 |
| Carbonate | 10.0-30.0 | 25.0-35.0 | 15.0-30.0 |
| Sulfate | 30.0-70.0 | 30.0-35.0 | 40.0-70.0 |
| Polymers 1-12 in Table II of Example I | 0.2-1.0 | 0.2-1.0 | 0.2-1.0 |
| Deionized water | Balance to 100 wt% | | |

(B). Heavy Duty Liquid Detergents

The following heaving duty liquid detergents are made by mixing the ingredients listed below *via* conventional processes. Such heavy duty liquid detergents are used to launder fabrics that are then dried by line drying and/or machine drying. Such fabrics may be treated with a fabric enhancer prior to and/or during drying. Such fabrics exhibit a clean appearance and have a soft feel.

Table XII

| Ingredients (wt%) | Example 4 | Example 5 | Example 6 | Example 7 | Example 8 | Example 9 | Example 10 |
|---|---|---|---|---|---|---|---|
| Alkyl ether sulfate (EO=1-3) | 8-15 | 11-14 | 12.07 | 12.07 | 8.32 | 13.5 | 13.5 |
| Linear alkylbenzene sulfonate | 0-10 | 1-6 | 1.86 | 1.66 | 5.52 | 1.5 | -- |
| Amine oxide | 0-2 | 0.5-1 | -- | 0.75 | -- | -- | -- |
| Alkyl ethoxylate (EO7) | 0-5 | 1-2 | 1.12 | 0.65 | 1.21 | -- | 1.5 |
| Citric acid | 0.1-6 | 1-3 | 1.5-2.5 | 1.5-2.5 | 1.5-2.5 | 1.5-2.5 | 1.5-2.5 |
| Fatty acid (DTPK) | 0.5-3 | 1-1.5 | 1.21 | 1.21 | 1.21 | 1.0 | 1.0 |
| Boric acid | 0-4 | 1-3 | 1.5-2.5 | 1.5-2.5 | 1.5-2.5 | 1.5-2.5 | 1.5-2.5 |
| Polyethyleneimine ethoxylate/ propoxylate | 0-3 | 0-2 | -- | -- | -- | 0.5-1.5 | 0.5-1.5 |
| Hexamethylene diamine (ethoxylated, quaternized, sulfated) | 0-1 | 0-0.5 | 0-0.5 | 0-0.5 | 0-0.5 | -- | -- |
| DTPA | 0-0.5 | 0.1-0.3 | 0.1-0.3 | 0.1-0.3 | 0.1-0.3 | 0.1-0.3 | 0.1-0.3 |
| Fluorescent whitening agent | 0-0.1 | 0.02-0.1 | 0.05-0.1 | 0.05-0.1 | 0.05-0.1 | 0.05-0.1 | 0.05-0.1 |
| Propylene glycol | 0-3 | 1-2 | 1-2 | 1-2 | 1-2 | 1-2 | 1-2 |
| NaOH | 0-5 | 1-4 | 2-3 | 2-3 | 3-3.5 | 2.5-3 | 2.5-3 |
| Polymersl-12 in Table II of Example I | 0.05-1 | 0.1-0.5 | 0.125-0.25 | 0.125-0.25 | 0.1-0.5 | 0.5 | 0.5 |
| Water and miscellaneous | Balance | Balance | Balance | Balance | Balance | Balance | Balance |
| Total | 100 | 100 | 100 | 100 | 100 | 100 | 100 |

Table XIII

| Ingredient (wt%) | Ex. 11 | Ex. 12 | Ex. 13 | Ex. 14 | Ex. 15 | Ex. 16 | Ex. 17 | Ex. 18 |
|---|---|---|---|---|---|---|---|---|
| Alkyl ether sulfate (EO=1-3) | 0-12 | 2-10 | 2.1 | 9 | 12 | 8.0 | 2.9 | -- |
| Linear alkylbenzene sulfonate | 0-20 | 1-3 | 2.0 | -- | 2.8 | 6.2 | 5.6 | 17.7 |
| Alkyl ethoxylate (EO=7 or 9) | 3-15 | 6-12 | 12.0 | 6 | 4.9 | 7.7 | 7.1 | -- |
| Alkyl ethoxylate (C12,14,16 EO20-25 PO1-2) | 0-55 | -- | -- | -- | -- | -- | -- | 51.4 |
| Citric acid | 0.5-6 | 1-3 | 1-3 | 1-3 | -- | 1.6 | 1.9 | -- |
| Fatty acids | 0-4 | 0.5-2 | 1.0 | 1.0 | 1.2 | 1.9 | 1.0 | 3.5 |
| Boric acid | 0-5 | 1-3 | 1-3 | 1-3 | -- | -- | -- | -- |
| Calcium and sodium formate | -- | -- | -- | -- | 2.2 | -- | -- | -- |
| Glycerine | -- | -- | -- | -- | 2.0 | -- | -- | -- |
| Polyethyleneimine ethoxylate/propoxy late | 0-3 | 0.5-2 | 0.5-2 | 0.5-2 | -- | -- | -- | -- |
| Hexamethylene diamine (ethoxylated,quatemized , sulfated) | 0-1 | 0-0.5 | 0-0.5 | 0-0.5 | -- | -- | -- | -- |
| Polyacrylate | 0-2 | -- | -- | -- | 1.0 | 0.1 | 0.1 | -- |
| DTPA | 0-0.5 | 0.1-0.2 | 0.1-0.2 | 0.1-0.2 | -- | -- | -- | 0.06 |
| Diethylene triamine penta methylene phosphonic acid | 0-0.5 | -- | -- | -- | 0.25 | -- | -- | -- |
| Fluorescent whitening agent | 0-0.2 | 0.05-0.1 | 0.05-0.1 | 0.05-0.1 | -- | 0.06 | 0.17 | -- |
| Propylene glycol | 0-5 | 1-2 | 1-2 | 1-2 | -- | -- | -- | -- |
| Butyl carbitol | 0-15 | -- | -- | -- | -- | -- | -- | 11.4 |
| Ethanolamine | 0-5 | -- | -- | -- | -- | 1.2 | -- | 4.8 |
| NaOH | 0-5 | 0-5 | 2.0 | 2.8 | 1.6 | 1.9 | 1.4 | -- |
| Polymers 1 -12 in Table II of Example I | 0.05-1 | 0.1-0.5 | 0.5 | 0.5 | 0.1-0.5 | 0.1-0.5 | 0.1-0.5 | 0.1-0.5 |
| Water and miscellaneous | Balance | Balance | Balance | Balance | Balance | Balance | Balance | Balance |
| Total | 100 | 100 | 100 | 100 | 100 | 100 | 100 | 100 |

Table XIV

| Ingredient (wt%) | Example 19 | Example 20 | Example 21 | Example 22 | Example 23 |
|---|---|---|---|---|---|
| Alkyl ether sulfate (EO=1-3) | 0-9 | 0-3 | 1.5 | 1.5 | -- |
| Linear alkylbenzene sulfonate | 5-20 | 10-15 | 12.0 | 13.5 | 13.5 |
| Alkyl ethoxylate (EO=7 or 9) | 0-9 | 0-6 | 1.5 | -- | 1.5 |
| Citric acid | 0.5-6 | 1-3 | 1-3 | 1-3 | 1-3 |
| Fatty acid | 0-3 | 0.5-2 | 1.0 | 1.0 | 1.0 |
| Boric acid | 0-5 | 1-3 | 1-3 | 1-3 | 1-3 |
| Polyethyleneimine ethoxylate/ propoxylate | 0-2 | 0.5-1.5 | 0.5-1.5 | 0.5-1.5 | 0.5-1.5 |
| Hexamethylene diamine (ethoxylated,quatemized, sulfated) | 0-1 | 0.3-0.5 | 0.3-0.5 | 0.3-0.5 | 0.3-0.5 |
| DTPA | 0-0.5 | 0.1-0.25 | 0.1-0.25 | 0.1-0.25 | 0.1-0.25 |
| Fluorescent whitening agent | 0-0.2 | 0.05-0.1 | 0.05-0.1 | 0.05-0.1 | 0.05-0.1 |
| Propylene glycol | 0-12 | 4-10 | 4-10 | 4-10 | 4-10 |
| NaOH | 0-5 | 1-4 | 1-4 | 1-4 | 1-4 |
| Polymers1-12 in Table II of Example I | 0.05-1 | 0.1-0.5 | 0.5 | 0.5 | 0.25 |
| Water and miscellaneous | Balance | Balance | Balance | Balance | Balance |
| Total | 100 | 100 | 100 | 100 | 100 |

Table XV

| Ingredient (wt%) | Ex. 24 | Ex. 25 | Ex. 26 | Ex. 27 | Ex. 28 | Ex. 29 |
|---|---|---|---|---|---|---|
| Alkyl ether sulfate (EO=1-3) | 8-10 | 6-8 | 5-7 | 2-4 | 2-3 | 1-1.5 |
| Linear alkylbenzene sulfonate | 6-7 | 8-10 | 5-7 | 8-10 | 6-8 | 9-11 |
| Amine Oxide | -- | -- | 0.3-0.7 | -- | -- | -- |
| Alkyl ethoxylate (EO=7 or 9) | 1-1.5 | 0.5-1 | 4-5 | 3-5 | 5-6 | 6-7 |
| Citric acid | 1.5-2 | 1-2 | 1-1.5 | 1.5-2.5 | 2.5-3 | 3-3.5 |
| Fatty acid | 1-1.5 | 1-1.5 | 1-1.5 | 1-1.5 | 3-3.5 | 2-3 |
| Enzymes | 0.5-1 | -- | 0.2-0.5 | -- | 0.3-0.5 | 0.5-1 |
| Boric acid | 1.5-2.5 | 1.5-2.5 | 1.5-2.5 | 1.5-2.5 | 1-1.5 | -- |
| Calcium and sodium formate | -- | -- | -- | -- | -- | 0.1-0.3 |
| Hexamethylene diamine (ethoxylated, quaternized, sulfated) | 0.25-0.75 | 0.25-0.75 | 0.25-0.75 | -- | -- | 0.25-0.75 |
| Polyethyleneimine ethoxylate/ propoxylate | -- | -- | 0.5-2 | 0.5-2 | 0.5-2 | -- |
| Ethyleneglycol/Vinylacetate copolymer | -- | -- | -- | -- | -- | 1-1.5 |
| DTPA | 0.1-0.5 | 0.1-0.2 | 0.1-0.2 | 0.1-0.2 | -- | -- |
| Diethylene triamine penta methylene phosphonic acid | -- | -- | -- | -- | 0.2-0.5 | 0.2-0.5 |
| Fluorescent whitening agent | 0.05-0.1 | 0.05-0.1 | 0.05-0.1 | 0.05-0.1 | 0.05-0.1 | 0.05-0.1 |

(continued)

| Ingredient (wt%) | Ex. 24 | Ex. 25 | Ex. 26 | Ex. 27 | Ex. 28 | Ex. 29 |
|---|---|---|---|---|---|---|
| Ethanol/Propylene glycol | 2-3 | 2-3 | 2-3 | 1-2 | 1-2 | 1-3 |
| Ethanolamine | -- | -- | -- | -- | 0.75-1 | 0.2-0.5 |
| NaOH | 3-4 | 2-3 | 2-3 | 2.5-4 | 2.5-4 | -- |
| NaCS | -- | -- | 0.1-0.5 | -- | 2-3 | 1-2 |
| Polymers1-12 in Table II of Example I | 0.05-1 | 0.1-0.5 | 0.5 | 0.5 | 0.1-0.5 | 0.25 |
| Water and miscellaneous | Balance | Balance | Balance | Balance | Balance | Balance |
| Total | 100 | 100 | 100 | 100 | 100 | 100 |

(C). Fabric Enhancers

Fabric enhancer compositions may be prepared by mixing together the ingredients listed in the proportions shown:

Table XVI

| Ingredient (wt%) | Ex. 30 | Ex. 31 | Ex. 32 | Ex. 33 | Ex. 34 |
|---|---|---|---|---|---|
| FSA | 12.0 | 21.0 | 18.0 | 14.0 | 12.0 |
| Low Mw alcohol | 1.95 | 3.0 | 3.0 | 2.28 | 2.28 |
| Rheology modifier | 1.25 | -- | 0.2 | -- | 0.2 |
| Perfume oil | 1.50 | 2.3 | 2.0 | 1.50 | 1.50 |
| Perfume encapsulation | 0.6 | 0.3 | 0.4 | -- | 0.15 |
| Phase Stabilizing Polymer | 0.25 | -- | -- | 0.142 | 0.25 |
| Calcium Chloride | 0.10 | 0.12 | 0.1 | 0.45 | 0.55 |
| DTPA | 0.005 | 0.005 | 0.005 | 0.005 | 0.005 |
| Preservative (ppm) | 5 ppm | | | | |
| Antifoam | 0.015 | 0.15 | 0.11 | 0.011 | 0.011 |
| Polyethylene imines | 0.15 | 0.05 | -- | 0.1 | -- |
| Stabilizing Surfactant | -- | -- | 0.5 | 0.2 | 0.2 |
| Organosiloxane polymer | 5 | -- | -- | -- | -- |
| Amino-functional silicone | -- | -- | -- | -- | 5 |
| Dye (ppm) | 40 | 11 | 30 | 40 | 40 |
| Ammonium Chloride | 0.10 | 0.12 | 0.12 | 0.10 | 0.10 |
| HCl | 0.010 | 0.01 | 0.10 | 0.010 | 0.010 |
| Deionized Water | Balance to 100 wt% | | | | |

(D). Rinse Additive

Rinse additive compositions may be prepared by mixing together the ingredients listed in the proportions shown:

Table XVII

| Ingredient | % wt |
|---|---|
| Structure material | 0-1.0 |

(continued)

| Ingredient | % wt |
|---|---|
| Polymers 1-12 in Table II of Example I | 0.01-15 |
| Dye | 0-0.01 |
| Perfume oil | 0-1.0 |
| Preservative | 0-0.2 |
| Deionized Water | Balance to 100 wt% |

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document, the meaning or definition assigned to that term in this document shall govern.

## Claims

1. A laundry detergent composition comprising:

   (1) from 0.2 wt% to 1wt% of a cationic polymer for sudsing profile optimization, which has a weight average molecular weight of from 20,000 to 350,000 Daltons, as measured by Size Exclusion Chromatography (SEC) with differential refractive index detection (RI), said cationic polymer consisting either of:

   (i) from 70 mol% to 90 mol% of a first structural unit derived from (meth)acrylamide (AAm); and
   (ii) from 10 mol% to 30 mol% of a second structural unit derived from a diallyl dimethyl ammonium salt (DADMAS),
   wherein said cationic polymer is free of any silicone-derived structural component,

   or:

   (i) from 65 mol% to 90 mol% of a first structural unit derived from (meth)acrylamide (AAm);
   (ii) from 10 mol% to 20 mol% of a second structural unit derived from a diallyl dimethyl ammonium salt (DADMAS); and
   (iii) from 1 mol% to 20 mol% of a third structural unit derived from vinylpyrrolidone (VP),
   and

   (2) from 1 wt% to 50 wt% of one or more anionic surfactants selected from the group consisting of $C_{10}$-$C_{20}$ linear or branched alkylethoxy sulfates having an average degree of ethoxylation ranging from 0.5 to 3, and combinations thereof,

   said composition further comprising from 0.2 wt% to 1 wt% of a silicone-derived antifoaming agent.

2. The laundry detergent composition of claim 1, wherein the second structural unit is derived from diallyl dimethyl ammonium chloride (DADMAC).

3. The laundry detergent compositions of claim 1, further comprising from 0.05 wt% to 5 wt% of one or more nonionic surfactants selected from the group consisting of $C_8$-$C_{18}$ alkyl alkoxylated alcohols having an average degree of alkoxylation from 1 to 20 and combinations thereof.

4. Use of a laundry detergent composition according to claim 1 for hand-washing fabrics to achieve optimized sudsing profile and minimal whiteness loss.

**Patentansprüche**

1. Wäschewaschmittel-Zusammensetzung, umfassend:

(1) von 0,2 Gew.-% bis 1 Gew.-% ein kationisches Polymer zur Schaumprofiloptimierung, das ein durchschnittliches Molekulargewicht (Gewichtsmittel) von 20.000 bis 350.000 Dalton aufweist, gemäß Messung durch Größenausschlusschromatographie (SEC) mit differentialer Brechungsindexdetektion (RI),
wobei das kationische Polymer entweder besteht aus:

(i) von 70 Mol-% bis 90 Mol-% einer aus (Meth)acrylamid (AAm) abgeleiteten ersten Struktureinheit; und
(ii) von 10 Mol-% bis 30 Mol-% einer von einem Diallyldimethylammoniumsalz (DADMAS) abgeleiteten zweiten Struktureinheit,

wobei das kationische Polymer frei von jeglicher, von Silikon abgeleiteten Strukturkomponente ist,
oder:

(i) von 65 Mol-% bis 90 Mol-% einer von (Meth)acrylamid (AAm) abgeleiteten ersten Struktureinheit;
(ii) von 10 Mol-% bis 20 Mol-% einer von einem Diallyldimethylammoniumsalz (DADMAS) abgeleiteten zweiten Struktureinheit; und
(iii) von 1 Mol-% bis 20 Mol-% einer von Vinylpyrrolidon (VP) abgeleiteten dritten Struktureinheit, und

(2) von 1 Gew.-% bis 50 Gew.-% ein oder mehrere anionische Tenside, ausgewählt aus der Gruppe bestehend aus linearen oder verzweigten $C_{10}$-$C_{20}$-Alkylethoxysulfaten mit einem mittleren Ethoxylierungsgrad im Bereich von 0,5 bis 3, und Kombinationen davon,

wobei die Zusammensetzung ferner von 0,2 Gew.-% bis 1 Gew.-% ein von Silikon abgeleitetes Antischaummittel umfasst.

2. Wäschewaschmittelzusammensetzung nach Anspruch 1, wobei die zweite Struktureinheit von Diallyldimethylammoniumchlorid (DADMAC) abgeleitet ist.

3. Wäschewaschmittelzusammensetzungen nach Anspruch 1, ferner umfassend von 0,05 Gew.-% bis 5 Gew.-% ein oder mehrere nichtionische Tenside, ausgewählt aus der Gruppe bestehend aus alkylalkoxylierten $C_8$-$C_{18}$-Alkoholen mit einem durchschnittlichen Alkoxylierungsgrad von 1 bis 20, und Kombinationen davon.

4. Verwendung einer Wäschewaschmittelzusammensetzung nach Anspruch 1 zur Handwäsche von Stoffen, um ein optimiertes Schaumprofil und einen minimalen Weißheitsgradverlust zu erzielen.

**Revendications**

1. Composition détergente pour le lavage du linge comprenant :

(1) de 0,2 % en poids à 1 % en poids d'un polymère cationique pour une optimisation de profil de moussage, lequel a une masse moléculaire moyenne en poids allant de 20 000 à 350 000 Daltons, telle que mesurée par chromatographie par exclusion de taille (SEC) avec détection de différence d'indice de réfraction (RI),
ledit polymère cationique étant constitué soit :

(i) de 70 % molaires à 90 % molaires d'un premier motif structural dérivé de (méth)acrylamide (AAm) ; et
(ii) de 10 % molaires à 30 % molaires d'un deuxième motif structural dérivé d'un sel de diallyl-diméthylammonium (DADMAS),

dans laquelle ledit polymère cationique est exempt d'un quelconque composant structural dérivé de silicone, soit :

(i) de 65 % molaires à 90 % molaires d'un premier motif structural dérivé de (méth)acrylamide (AAm) ;
(ii) de 10 % molaires à 20 % molaires d'un deuxième motif structural dérivé d'un sel de diallyl-diméthylammonium (DADMAS) ; et
(iii) de 1 % molaire à 20 % molaires d'un troisième motif structural dérivé de vinylpyrrolidone (VP), et

(2) de 1 % en poids à 50 % en poids d'un ou plusieurs agents tensioactifs anioniques choisis dans le groupe constitué d'alkyléthoxy-sulfates linéaires ou ramifiés en $C_{10}$ à $C_{20}$ ayant un degré moyen d'éthoxylation allant de 0,5 à 3, et des combinaisons de ceux-ci,

ladite composition comprenant en outre de 0,2 % en poids à 1 % en poids d'un agent antimousse dérivé de silicone.

2. Composition détergente pour le lavage du linge selon la revendication 1, dans laquelle le deuxième motif structural est dérivé de chlorure de diallyl-diméthylammonium (DADMAC).

3. Compositions détergentes pour le lavage du linge selon la revendication 1, comprenant en outre de 0,05 % en poids à 5 % en poids d'un ou plusieurs agents tensioactifs non ioniques choisis dans le groupe constitué d'alcools alkyl-alcoxylés en $C_8$ à $C_{18}$ ayant un degré moyen d'alcoxylation allant de 1 à 20 et des combinaisons de ceux-ci.

4. Utilisation d'une composition détergente pour le lavage du linge selon la revendication 1 pour le lavage à la main de tissus pour obtenir un profil de moussage optimisé et une perte minimale de blancheur.

**EP 3 122 855 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011107397 A
- EP 0685250 A1
- US 2014023609 A1